# EUROPEAN PATENT APPLICATION

(11) **EP 4 803 944 A1**
(43) Date of publication of application: **09.09.2026**
(21) Application number: 26159087.1
(22) Date of filing: 17.02.2026
(51) Int. Cl.: G02B 6/44

(54) **AN ARRANGEMENT AND METHOD FOR TERMINATING A LINE IN A SUBSEA ENVIRONMENT**

(30) Priority: 03.03.2025 GB 202503041
(71) Applicant: Siemens Energy Limited, Newcastle Upon Tyne NE6 2YL (GB)
(72) Inventor: KEITH, Philip, Grange-Over-Sands, LA11 7EE (GB); SIMMONDS, Mark, Ulverston, Cumbria, LA12 7QL (GB)
(74) Representative: Isarpatent

(57) **Abstract**

A fiber termination arrangement for terminating an optical line includes an outer housing having a first end, a second end, a first groove, a second groove, and an opening that extends in an axial direction between the first end and the second end. A sheath seal is positioned within the opening and includes a first sheath seal member having a first contact surface arranged to sealingly engage an outer sheath, and a first head member sealingly positioned within the first groove, and a second sheath seal member having a second contact surface arranged to sealingly engage the outer sheath, and a second head member sealingly positioned within the second groove. A tube seal is positioned within the opening and includes a first tube seal member having a first tube seal surface arranged to sealingly engage a tube, and a second tube seal member having a second tube seal surface arranged to sealingly engage the tube. A sheath end cap is coupled to a first end of the outer housing to inhibit movement of the sheath seal in the axial direction, the sheath end cap including a first aperture sized to allow passage of the outer sheath. A tube end cap is coupled to a second end of the outer housing to inhibit movement of the tube seal in the axial direction, the tube end cap including a second aperture sized to inhibit passage of components larger than the tube.

## Description

### BACKGROUND

Umbilical cables are used to provide power, communication, and fiber optic lines to subsea operations and systems including oil and gas recovery systems. The optical lines must be broken out from the umbilical cable construction and terminated to connector systems to provide reliable data communication between topside control units and subsea structures.

During the breakout and termination process, sealing interfaces are established in the umbilical sealing area to ensure a proper seal within the connector system. These sealing interfaces may be exposed to differential pressures as high as 450 Bar on different layers of the umbilical cable.

### SUMMARY

In one aspect, a fiber termination arrangement for terminating an optical line in a subsea environment where the optical line includes an outer sheath and a tube disposed within the outer sheath includes an outer housing having a first end, a second end, and an opening that extends in an axial direction between the first end and the second end. A sheath seal includes a first groove and a second groove, the sheath seal positioned within the opening. The sheath seal includes a first sheath seal member having a first contact surface arranged to sealingly engage the outer sheath, and a first head member sealingly positioned within the first groove, and a second sheath seal member having a second contact surface arranged to sealingly engage the outer sheath, and a second head member sealingly positioned within the second groove. The termination arrangement further includes a tube seal positioned within the opening, the tube seal including a first tube seal member having a first tube seal surface arranged to sealingly engage the tube, and a second tube seal member having a second tube seal surface arranged to sealingly engage the tube. A sheath end cap is coupled to a first end of the outer housing to inhibit movement of the sheath seal in the axial direction, the sheath end cap includes a first aperture sized to allow passage of the outer sheath. A tube end cap is coupled to a second end of the outer housing to inhibit movement of the tube seal in the axial direction, the tube end cap including a second aperture sized to inhibit passage of components larger than the tube.

The fiber termination arrangement may include a first groove including a groove cylindrical surface and a groove conical surface that cooperate to define a tapered interior in the first groove.

The fiber termination arrangement may also include a first head member that includes a first cylindrical surface engaged with the groove cylindrical surface and a second cylindrical surface engaged with the groove conical surface.

The fiber termination arrangement may also include a first contact surface that includes a plurality of pips, each pip having a smaller diameter than a remainder of the first contact surface.

The fiber termination arrangement may also include a first sheath seal member that is formed from a first material, the first sheath seal member further comprising an anti-extrusion member formed from a second material different than the first material and embedded within the first material.

The fiber termination arrangement may also include an anti-extrusion member that includes an axial canted coil spring.

The fiber termination arrangement may also include a sheath seal that further comprises a first inner housing and a second inner housing each disposed within the opening of the outer housing, the first groove formed as part of the first inner housing and the second groove formed as part of the second inner housing.

The fiber termination arrangement may also include a shoulder formed as part of the outer housing and wherein the second inner housing abuts the shoulder and the first inner housing biases the second inner housing and the second sheath seal member toward the shoulder, and wherein the sheath end cap biases the first inner housing and the first sheath seal member toward the shoulder.

The fiber termination arrangement may also include a first tube seal surface that includes a plurality of pips, each pip having a smaller diameter than a remainder of the first tube seal surface.

The fiber termination arrangement may also include a tube seal that further comprises a first base member, a first packing member, a second base member, and a second packing member, and wherein the first tube seal member is positioned between the first base member and the first packing member and the second tube seal member is positioned between the second base head member and the second packing member.

The fiber termination arrangement may also include a first outer seal that includes a first planar surface that sealingly engages the first base member and a first conical surface that sealingly engages the first packing member, and wherein the second outer seal includes a second planar surface that sealingly engages the second base member and a second conical surface that sealingly engages the second packing member.

The fiber termination arrangement may also include a first packing member that fixedly abuts the tube end cap, a first tube seal member that abuts the first packing member, a first base member that abuts the first tube seal member, a second packing member that abuts the first base member, a second tube seal member that abuts the second packing member, and a second base member that abuts the second tube seal member, and wherein the second base member is biased axially toward the tube end cap to compress the second tube seal member between the second base member and the second packing member and to compress the first tube seal member between the first base member and the first packing member.

The fiber termination arrangement may also include a tube connecting member operable to electrically connect the tube and the tube end cap to extend cathodic protection therebetween.

The fiber termination arrangement may also include a tube connecting member that includes a plunger and a threaded adjustment mechanism, the threaded adjustment mechanism operable to move the plunger between an engaged position and a disengaged position.

The fiber termination arrangement may also include a locking ring coupled to the first tube seal and the second tube seal to bias the first tube seal surface and the second tube seal surface into engagement with the tube.

In another aspect, a method of terminating an optical line in a subsea environment includes positioning the optical line within an opening of an outer housing, the entire cable entering the opening at a first end of the outer housing, and a tube exiting the outer housing through a tube end cap. The method also includes abutting a first tube seal assembly against the tube end cap, the first tube seal assembly disposed inside the outer housing, and placing a second tube seal assembly inside the outer housing, the second tube seal assembly abutting the first tube seal assembly. The method further includes abutting a second sheath seal assembly against a shoulder of the outer housing, the second sheath seal assembly disposed within the outer housing, and placing a first sheath seal assembly inside the outer housing, the first sheath seal member abutting the second sheath seal member. The method also includes attaching a sheath end cap to the outer housing, biasing the first sheath seal assembly into engagement with the second sheath seal assembly in response to attachment of the sheath end cap, and installing a locking ring to bias the first tube seal assembly into engagement with the second tube seal assembly.

In another aspect, the step of biasing the first sheath seal assembly into engagement with the second sheath seal assembly may further include inserting a first head member of a first sheath seal member into a first groove to form a seal therebetween, and displacing a first contact surface of the first sheath seal member into sealing engagement with the outer sheath.

In another aspect, the step of biasing the first tube seal assembly into engagement with the second tube seal assembly may further include compressing a first tube seal member between a first base member and a first packing member; and displacing a first tube seal surface of the first tube seal member into sealing engagement with the tube.

In another aspect, the method may further include electrically connecting the tube and the tube end cap to extend cathodic protection therebetween.

### BRIEF DESCRIPTION OF THE DRAWINGS

To easily identify the discussion of any particular element or act, the most significant digit or digits in a reference number refer to the figure number in which that element is first introduced.
FIG. 1 is a cross-sectional view of an example of an umbilical cable that includes an outer sheath and a tube arranged to protect one or more optical lines.
FIG. 2 is a cross-sectional perspective view of a fiber termination arrangement taken along a central axis of the umbilical cable of FIG. 1.
FIG. 3 is a side cross-sectional view of the fiber termination arrangement of FIG. 2.
FIG. 4 is a cross-sectional perspective view of a sheath seal of the fiber termination arrangement of FIG. 2 and FIG. 3.
FIG. 5 is a cross-sectional perspective view of an inner housing of the sheath seal of FIG. 4.
FIG. 6 is a cross-sectional view of a sheath seal member of the sheath seal of FIG. 4.
FIG. 7 is a front view of an anti-extrusion member suitable for use with the sheath seal member of FIG. 6.
FIG. 8 is a cross-sectional view of a portion of the sheath seal of FIG. 4 in a pre-assembled state in which a head member of the sheath seal member has just entered a groove of the inner housing.
FIG. 9 is a cross-sectional view of the portion of the sheath seal of FIG. 8 in an assembled state in which the head member is fully engaged with the groove.
FIG. 10 is a cross-sectional perspective view of a tube seal of the fiber termination arrangement of FIG. 2.
FIG. 11 is a cross-sectional perspective view of a base member for use with the tube seal of FIG. 10.
FIG. 12 is a cross-sectional perspective view of a tube seal member for use with the tube seal of FIG. 10.
FIG. 13 is a cross-sectional perspective view of a packing member for use with the tube seal of FIG. 10.
FIG. 14 is a cross-sectional view of a portion of the tube seal of FIG. 10 in a pre-assembled state in which a tube seal member abuts a base member and a packing member is positioned adjacent the tube seal member.
FIG. 15 is a cross-sectional view of the portion of the tube seal of FIG. 14 in an assembled state in which the tube seal member abuts the base member and the packing member contacts the tube seal member.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms (i.e., one or more) as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, terms such as "first", "second", "third" and so forth may be used herein to refer to various elements, information, functions, or acts, but should not be considered as limiting in any way. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

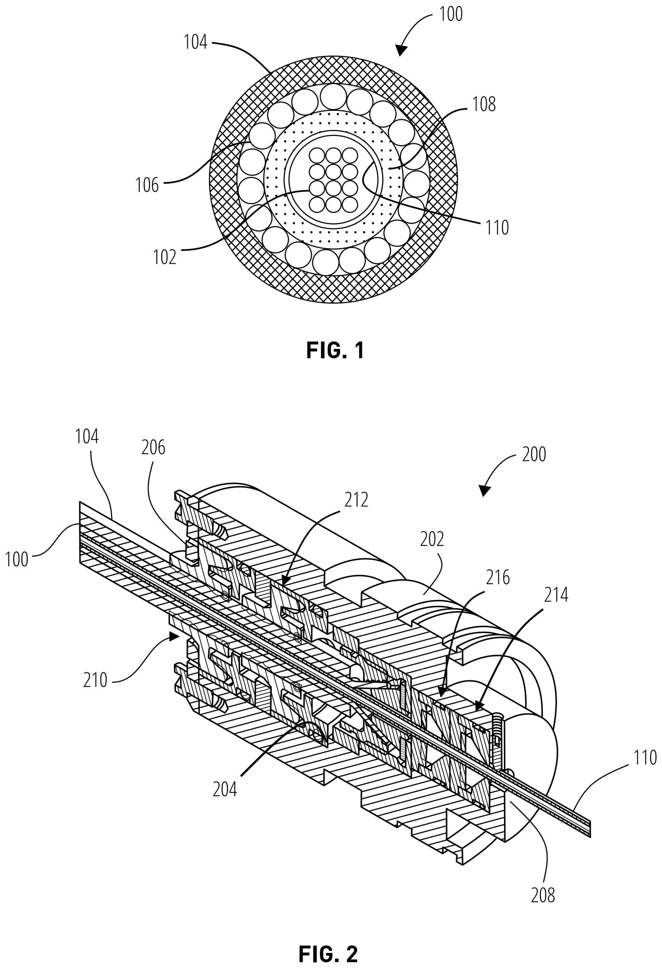

FIG. 1 illustrates an example of an umbilical cable 100 that may be used to provide power, communication, and optical lines 102 to subsea systems and applications such as oil and gas recovery systems. The umbilical cable 100 may have one end communicating with subsea equipment and structures with the other end being topside or above the surface of the water such that a potential pressure difference between the two ends of up to 450 Bars is possible.

The umbilical cable 100 is a multi-layered component that may include an outer sheath 104, armor 106, an inner sheath 108, and a tube 110 that defines an interior. Optical lines 102 pass within the tube 110 and may carry power, communications, control, or other signals as may be desired. The outer sheath 104 is typically formed from a resilient and waterproof material that provides protection from water and impacts to the inner layers. The armor 106, if present typically includes a metal layer or a layer of metal wires that provide stiffness or strength to the umbilical cable 100. An inner sheath 108 may then be positioned inside of the armor 106. The inner sheath 108 may be formed from materials similar to the outer sheath 104. The tube 110 is preferably a metallic tube sized to hold the desired number of optical lines 102. Of course, additional layers could be provided to the umbilical cable 100 for additional protection or some of the layers described could be omitted.

The optical lines 102 must be broken out from the umbilical cable 100 and terminated to connector systems to provide reliable communication between topside control units and subsea structures. It should be noted that while the description provided herein describes features related to the termination of optical lines 102, the same features, arrangements, and components could be applied to other types of lines, including data, power, communications, control or other lines carrying other signals or power. Thus, the arrangements should not be limited to optical lines 102 alone.

During the breakout and termination process, sealing interfaces must be established with the umbilical cable 100 to ensure a chamber can be maintained within the connector system at about 1 Bar. These sealing interfaces are selected to provide sealing protection for differential pressures up to 450 Bar between different layers of the umbilical cable 100.

FIG. 2 illustrates a fiber termination arrangement 200 that is designed to accept a wide range of umbilical cables 100 but that is particularly well suited for use with umbilical cables 100 having metal tubes 110 between 2 mm and 6 mm and with outer sheaths 104 between 9 mm and 20 mm.

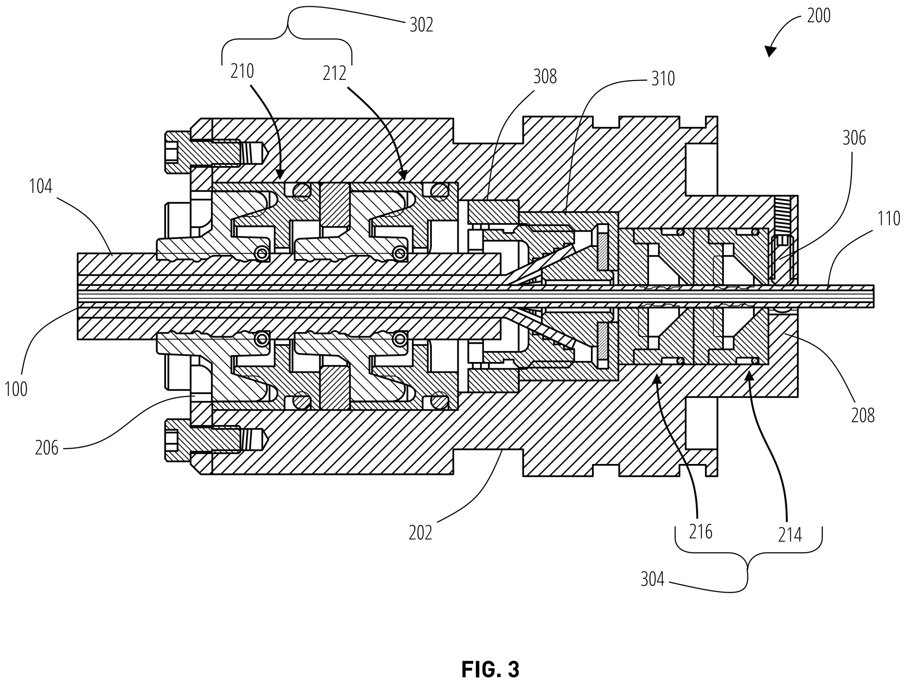

The fiber termination arrangement 200 includes an outer housing 202 that includes an opening or hollow interior and a shoulder 204 formed as part of the interior wall. The umbilical cable 100 passes through a sheath end cap 206 at one end of the outer housing 202 to enter the housing. The sheath end cap 206 is sized to allow entry of the outer sheath 104. The tube 110 and any internal optical lines 102 exit the outer housing 202 through a tube end cap 208 that is sized to only allow the tube 110 and smaller components to pass. As is better illustrated in FIG. 3, a first sheath seal assembly 210, a second sheath seal assembly 212, a first tube seal assembly 214, and a second tube seal assembly 216 are each disposed within the interior of the outer housing 202.

Specifically, with reference to FIG. 3, a sheath seal 302 which includes the first sheath seal assembly 210 and the second sheath seal assembly 212 is positioned near the first end of the outer housing 202 (i.e., near the sheath end cap 206) and is arranged to sealably engage the outer sheath 104 of the umbilical cable 100. Sometimes, one of the first sheath seal assembly 210 and the second sheath seal assembly 212 is referred to as a primary sheath seal assembly with the other being the secondary sheath seal assembly.

A tube seal 304 which includes the first tube seal assembly 214 and the second tube seal assembly 216 is positioned near the second end of the outer housing 202 (i.e., near the tube end cap 208) and is arranged to sealably engage the tube 110 of the umbilical cable 100. Sometimes, one of the first tube seal assembly 214 and the second tube seal assembly 216 is referred to as the primary tube seal assembly with the other being referred to as the secondary tube seal assembly.

A tube connecting member 306 is positioned within the tube end cap 208 and is movable radially (normal to the long axis of the umbilical cable 100) to engage or disengage the tube 110 as it passes through the tube end cap 208. In the illustrated construction, the tube connecting member 306 threadably engages the tube end cap 208 such that rotation of the tube connecting member 306 causes the movement between engagement and disengagement. When engaged, the tube connecting member 306 provides electrical contact between the tube 110 and outer housing 202 such that cathodic protection is extended from the outer housing 202 to the tube 110.

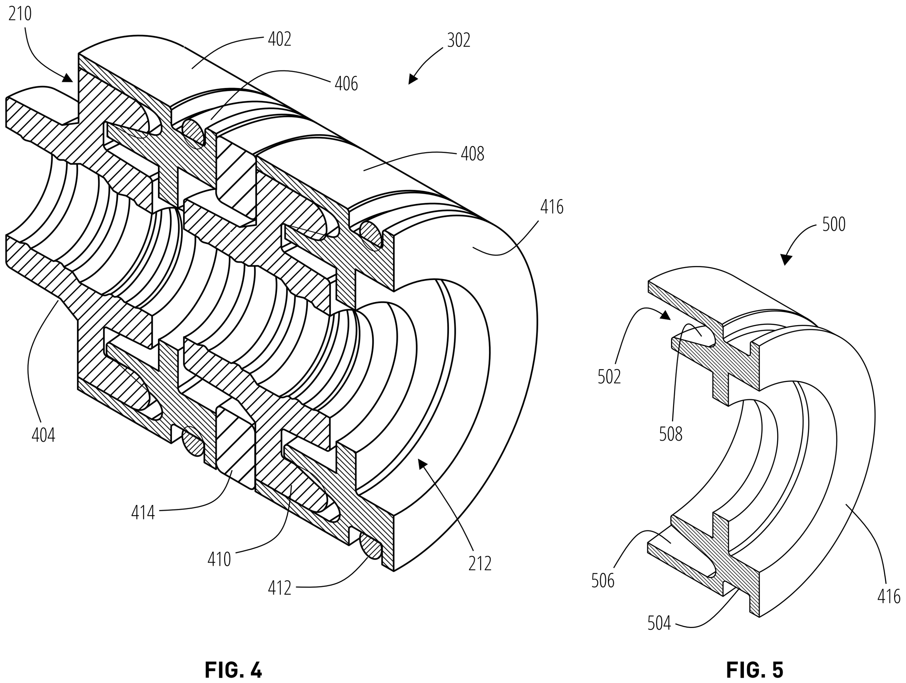

FIG. 4 illustrates the sheath seal 302 in greater detail. As illustrated, the sheath seal 302 includes the first sheath seal assembly 210 and the second sheath seal assembly 212 with both the first sheath seal assembly 210 and the second sheath seal assembly 212 being substantially identical. The first sheath seal assembly 210 includes a first inner housing 402 and a first sheath seal member 404 disposed partially within the first inner housing 402. A first O-ring 406 surrounds a portion of the first inner housing 402 and is arranged to engage the outer housing 202 when the first inner housing 402 is positioned within the outer housing 202 to form a seal therebetween.

The second sheath seal assembly 212 includes a second inner housing 408 and a second sheath seal member 410 positioned at least partially within the second inner housing 408. A second O-ring 412 surrounds a portion of the second inner housing 408 and is arranged to engage the outer housing 202 when the second inner housing 408 is positioned within the outer housing 202 to form a seal therebetween.

In some constructions, a spacer 414 may be positioned between the first sheath seal assembly 210 and the second sheath seal assembly 212 to provide a sheath seal 302 having a desired length. Thus, wider or narrower spacers 414 are possible, or the spacer 414 could be omitted altogether.

FIG. 5 illustrates an inner housing 500 that is suitable for use as either of the first inner housing 402 or the second inner housing 408 as these inner housings are largely identical. The inner housing 500 is preferably formed as a single component from a metallic or other sufficiently strong and rigid material. The inner housing 500 includes a groove 502, an O-ring groove 504, and an abutment surface 416. The abutment surface 416 is a planar surface that is provided to abut against one of various components. For example, the abutment surface 416 may abut against the shoulder 204 to inhibit further axial movement of the inner housing 500 toward the second end of the outer housing 202 when installed. Alternatively, the abutment surface 416 may contact the spacer 414 in arrangements that include the spacer 414.

The O-ring groove 504 extends circumferentially around the inner housing 500 and is sized to received one of the first O-ring 406 and the second O-ring 412. The first O-ring 406 and the second O-ring 412 in turn engage the inner surface of the outer housing 202 to form a seal therebetween.

The groove 502 is formed by the cooperation of a cylindrical surface 506, a conical surface 508, and a curved or semi-cylindrical surface that interconnects the cylindrical surface 506 and the conical surface 508. The cooperation of the cylindrical surface 506 and the conical surface 508 results in a groove 502 that has a shrinking width as you move axially into the groove 502. In the illustrated construction, the cylindrical surface 506 forms the outermost surface of the groove 502 and the conical surface 508 forms the innermost surface. However, the position of these surfaces could be reversed and the cylindrical surface 506 could be replaced with a second conical surface if desired.

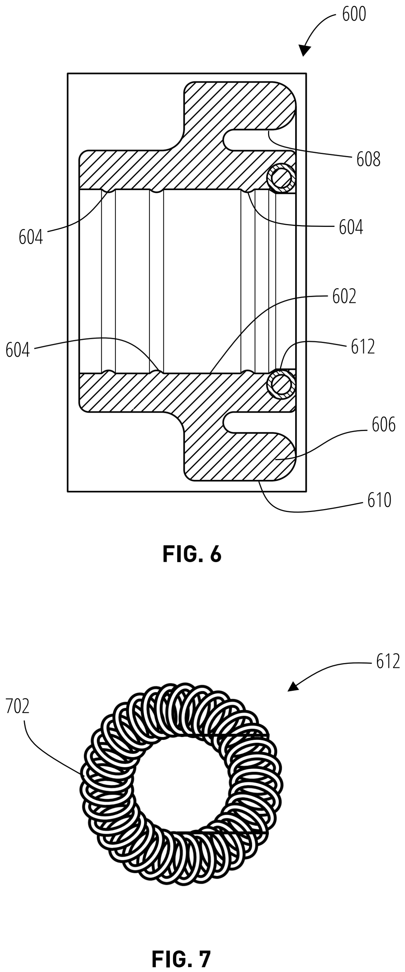

FIG. 6 illustrates a sheath seal member 600 that could be used as the first sheath seal member 404 and/or the second sheath seal member 410 as these sheath seal members are substantially identical. The inner housing 500 is preferably formed from a resilient material (e.g., elastomer, rubber, etc.) that allows for some deformation during installation to form the desired seals. The sheath seal member 600 includes a contact surface 602, one or more pips 604, and a head member 606.

The contact surface 602 is generally a cylindrical surface or bore that is sized to closely engage the outer sheath 104 of the umbilical cable 100. One or more pips 604 are formed as part of the sheath seal member 600 and have a diameter smaller than the contact surface 602. The pips 604 therefore extend radially inward from the contact surface 602 and assure contact with the outer sheath 104 during installation of the fiber termination arrangement 200. The inner diameter of the contact surface 602 as well as the diameter of the pips 604 are selected based on the diameter of the outer sheath 104 of the umbilical cable 100 being terminated.

The head member 606 extends radially outward from the remainder of the inner housing 500 and defines a P-shaped cross section. The head member 606 includes a first cylindrical surface 608 and a second cylindrical surface 610 with the second cylindrical surface 610 having a diameter that closely matches a diameter of the cylindrical surface 506 of the inner housing 500. A semi-cylindrical or other curved surface interconnects the first cylindrical surface 608 and the second cylindrical surface 610.

In some constructions, an anti-extrusion member 612 is embedded or otherwise placed within the material that forms the sheath seal member 600. The anti-extrusion member 612 may be embedded into the sheath seal member 600 during the molding process and increases the ability of the sheath seal member 600 to resist extrusion while under a differential pressure up to 450 bar.

As illustrated in FIG. 7, one possible anti-extrusion member 612 includes an axial canted coil spring 702 formed into a circle or garter spring. The axial canted coil spring 702 provides additional stiffness and strength in the region near its installation, thereby providing additional resistance to extrusion of the sheath seal member 600 when placed under a large pressure differential.

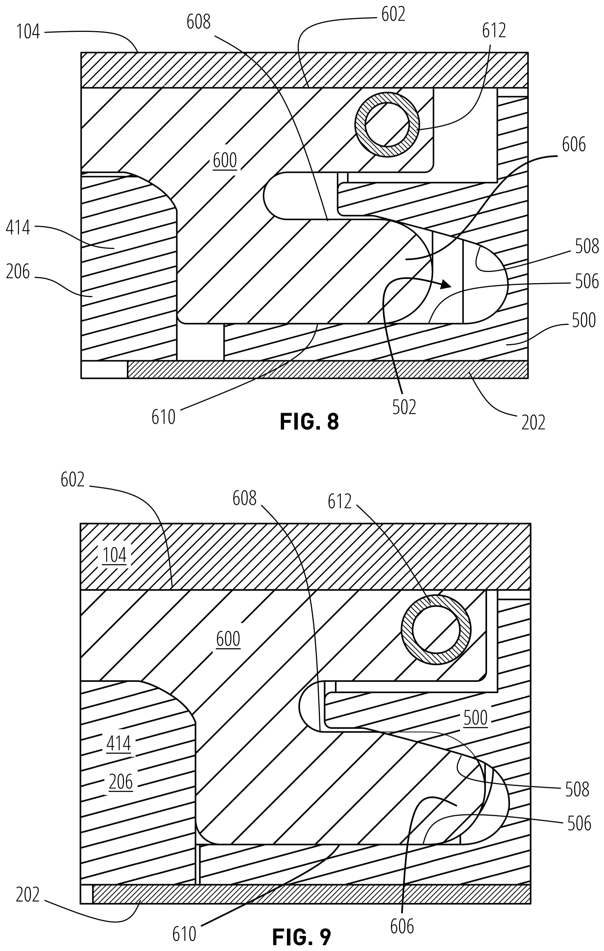

FIG. 8 illustrates the relationship between the inner housing 500 and the sheath seal member 600 during the assembly process. Specifically, FIG. 8 illustrates the relationship prior to final assembly or a pre-assembled state. In this arrangement, the head member 606 is positioned at the entrance to the groove 502. The second cylindrical surface 610 of the head member 606 is in contact with the cylindrical surface 506 of the inner housing 500 and the first cylindrical surface 608 has just come into contact with the conical surface 508. The outer surface of the inner housing 500, and in particular one of the first O-ring 406 and the second O-ring 412 is sealably engaged with the outer housing 202 and the contact surface 602, and the pips 604 are in sealing contact with the outer sheath 104.

The spacer 414, if the sheath seal member 600 is the second sheath seal member 410, or the sheath end cap 206 if the sheath seal member 600 is the first sheath seal member 404 abuts the second sheath seal member 410 or the first sheath seal member 404 to bias the second sheath seal member 410 axially toward a bottom of the groove 502 of the second inner housing 408 or the first sheath seal member 404 axially toward the bottom of the groove 502 of the first inner housing 402.

FIG. 9 illustrates the arrangement of FIG. 8 after the sheath end cap 206 or the spacer 414 has moved axially into its final operating position. In this position, the head member 606 of the first sheath seal member 404 or the second sheath seal member 410 is pushed fully into the groove 502 of the respective first inner housing 402 and second inner housing 408. The shape of the groove 502 forces compression of the head member 606 within the groove 502, thereby assuring a seal between the head member 606, the cylindrical surface 506, and the conical surface 508 that define the groove 502.

During assembly of the fiber termination arrangement 200, the P-shaped head members 606 of the first sheath seal assembly 210 and the second sheath seal assembly 212 are forced into the tapered grooves 502 in the first inner housing 402 and the second inner housing 408. This process activates the head members 606 through compression. Due to the pressure difference the first sheath seal assembly 210 and the second sheath seal assembly 212 will see in service, this arrangement is further energized when deployed. The extrusion gap is controlled by the first inner housing 402, the second inner housing 408, and seal extrusion is restricted by the anti-extrusion member 612.

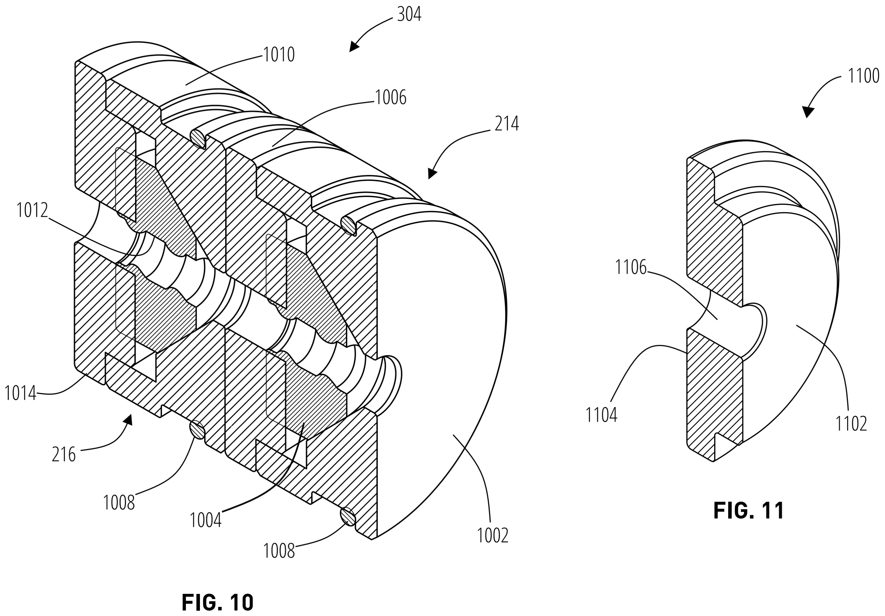

FIG. 10 illustrates the tube seal 304 in greater detail. As illustrated, the tube seal 304 includes the first tube seal assembly 214 and the second tube seal assembly 216 with both the first tube seal assembly 214 and the second tube seal assembly 216 being substantially identical.

The first tube seal assembly 214 includes a first packing member 1002, a first tube seal member 1004, and a first base member 1006 with the first tube seal member 1004 sandwiched between the first packing member 1002 and the first base member 1006. An O-ring 1008 surrounds a portion of the first packing member 1002 and is arranged to engage the outer housing 202 when the first packing member 1002 is positioned within the outer housing 202 to form a seal therebetween.

The second tube seal assembly 216 includes a second packing member 1010, second tube seal member 1012, and a second base member 1014 with the second tube seal member 1012 sandwiched between the second packing member 1010 and the second base member 1014. An O-ring 1008 surrounds a portion of the second packing member 1010 and is arranged to engage the outer housing 202 when the second packing member 1010 is positioned within the outer housing 202 to form a seal therebetween.

FIG. 11 illustrates a base member 1100 that is suitable for use as either or each of the first base member 1006 and the second base member 1014. The base member 1100 is generally formed as a single component from a stiff and strong material such as a metal (e.g., steel). The base member 1100 includes a planar compression face 1102, a planar abutment face 1104, and a bore 1106 that extends between the compression face 1102 and the abutment face 1104. The bore 1106 is sized to allow passage of the tube 110 therethrough but to inhibit the passage of larger diameter portions of the umbilical cable 100.

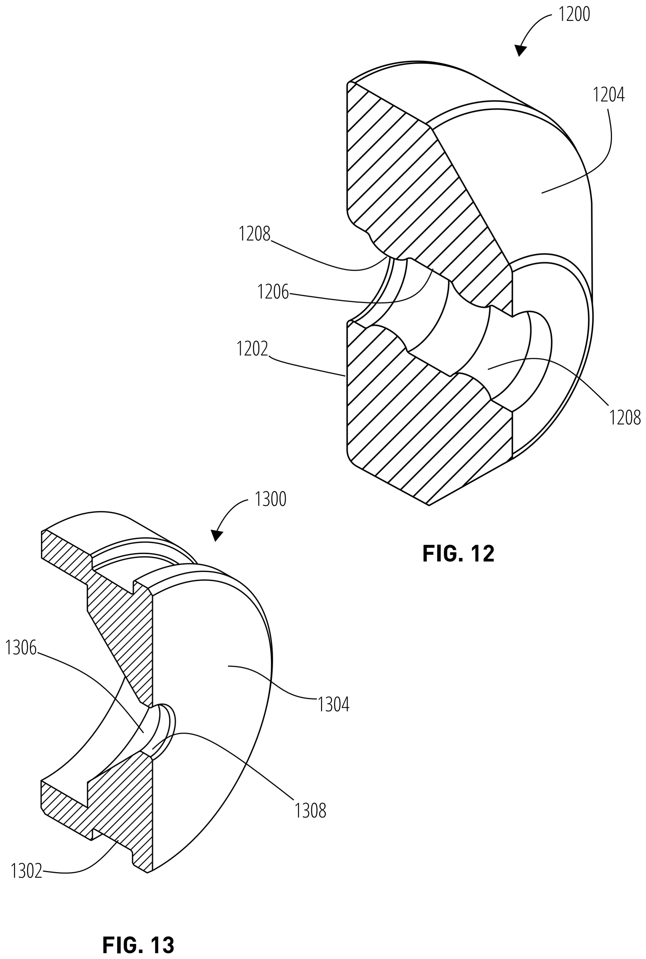

FIG. 12 illustrates a tube seal member 1200 that is suitable for use as either or each of the first tube seal member 1004 and the second tube seal member 1012. The tube seal member 1200 is generally formed as a single component from a resilient material such as an elastomer or rubber. The tube seal member 1200 includes a planar surface 1202, a conical surface 1204, a tube seal surface 1206, and one or more tube pips 1208 that extend radially inward from the tube seal surface 1206. The diameter of the tube seal surface 1206 and the height or size of the tube pips 1208 are selected to closely match the diameter of the tube 110 of the umbilical cable 100. In most constructions, the umbilical cable 100 includes a metal tube 110 between 2 mm and 6 mm with other sizes being possible. The diameter of the tube seal surface 1206 and of the tube pips 1208 is selected to assure an adequate seal with the tube 110 being terminated.

FIG. 13 illustrates a packing member 1300 that is suitable for use as either or each of the first packing member 1002 and the second packing member 1010. The packing member 1300 is generally formed as a single component from a stiff and strong material such as a metal (e.g., steel). The packing member 1300 includes an O-ring groove 1302 sized to receive the O-ring 1008, an abutment surface 1304 that is planar, a compression face 1306 that is conical and corresponds with the conical surface 1204 of the tube seal member 1200, and a bore 1308 that extends between the compression face 1306 and the abutment surface 1304. The bore 1308 is sized to allow passage of the tube 110 therethrough but to inhibit the passage of larger diameter portions of the umbilical cable 100.

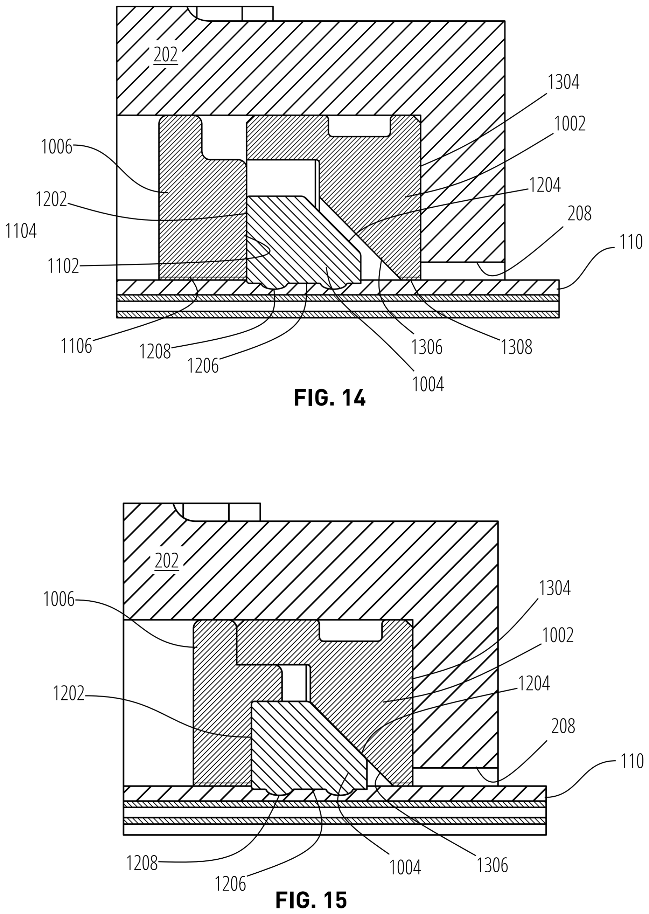

FIG. 14 illustrates the first tube seal assembly 214 in a pre-assembled state but positioned within the outer housing 202. The first packing member 1002 is positioned such that the abutment surface 1304 is positioned in contact with the tube end cap 208 to inhibit further axial movement of the first packing member 1002 toward the tube end cap 208.

The first tube seal member 1004 is positioned within the first packing member 1002 with its conical surface 1204 juxtaposed with the compression face 1306 of the first packing member 1002. The tube seal surface 1206 and the tube pips 1208 are positioned adjacent or in contact with the tube 110 of the umbilical cable 100.

The first base member 1006 is next positioned within the outer housing 202 with its compression face 1102 positioned in contact with the planar surface 1202 of the first tube seal member 1004. The bore 1106 is positioned adjacent the tube 110 such that the tube 110 passes through the first base member 1006, the first tube seal member 1004, the first packing member 1002, and the tube end cap 208.

With continued assembly, as illustrated in FIG. 15, the first base member 1006 is further biased toward the 208 such that the conical surface 1204 of the first tube seal member 1004 engages the compression face 1306 of the first packing member 1002. Continued movement of the first base member 1006 to the final operating position of FIG. 15 compresses the first tube seal member 1004 between the first packing member 1002 and the first base member 1006 which results in deformation and increased sealing pressure between the tube seal surface 1206 and the tube pip 1208 of the first tube seal member 1004 and the tube 110.

The first tube seal assembly 214 and the second tube seal assembly 216 use elastomeric tube seal members 1200 to form a seal against the metal tube 110 of the umbilical cable 100. The tube seal members 1200 are energized through compression during assembly between the base member 1100 and the packing member 1300.

With reference to FIG. 3, to terminate an umbilical cable 100 using the fiber termination arrangement 200 the umbilical cable 100 is placed in the outer housing 202 with the outer sheath 104 entering the outer housing 202 at the first end and the tube 110 exiting the outer housing 202 at the opposite second end. The tube connecting member 306 engages the tube 110 at the tube end cap 208 to extend cathodic protection between the tube 110 and the tube end cap 208.

The first tube seal assembly 214 is positioned within the outer housing 202 with the first packing member 1002 abutting the tube end cap 208. The second tube seal assembly 216 is then positioned within the outer housing 202 with the second packing member 1010 abutting the first base member 1006. The second base member 1014 is biased toward the tube end cap 208 such that the first tube seal member 1004 is biased into contact with the first packing member 1002, the first base member 1006 is in contact with the first tube seal member 1004, and the first tube seal member 1004 is compressed to provide contact between the first tube seal member 1004 and the tube 110.

The second base member 1014 is biased into contact with the second tube seal member 1012 which in turn contacts the second packing member 1010 such that the second tube seal member 1012 is compressed and forms a seal between the second tube seal member 1012 and the tube 110. In addition, the second packing member 1010 engages the first base member 1006 to bias the first tube seal assembly 214 as described. Thus, two seals are formed between the tube 110, the first tube seal member 1004, and the second tube seal member 1012.

In the illustrated arrangement, a transfer member 310 engages the second base member 1014 and a locking ring 308 engages the transfer member 310. Installation of the locking ring 308 biases the transfer member 310 into engagement with the second base member 1014 to energize bot the first tube seal assembly 214 and the second tube seal assembly 216. The illustrated arrangement allows for the installation and testing of the first tube seal assembly 214 and the second tube seal assembly 216 prior to the installation of the first sheath seal assembly 210 and second sheath seal assembly 212.

The second sheath seal assembly 212 is then positioned within the outer housing 202 with the second inner housing 408 abutting the shoulder 204 to inhibit further axial movement of the second sheath seal assembly 212 toward the tube end cap 208. The second sheath seal member 410 is positioned with the head member 606 of the second sheath seal member 410 positioned within the groove 502 of the second inner housing 408. The spacer 414 is positioned adjacent to and abuts the second sheath seal member 410. The first inner housing 402 is positioned within the outer housing 202 and abuts the spacer 414. Finally, the first sheath seal member 404 is positioned such that the head member 606 of the first sheath seal member 404 is positioned within the groove 502 of the first inner housing 402.

The sheath end cap 206 is attached to the outer housing 202 and contacts the first sheath seal member 404. As the sheath end cap 206 is moved to its operating position, the sheath end cap 206 biases the first sheath seal member 404 toward the first inner housing 402, biases the first inner housing 402 toward the spacer 414, biases the spacer 414 toward the second sheath seal member 410, and biases the second sheath seal member 410 toward the second inner housing 408 to compete the various seals. The contact surface 602 and the pips 604 of the first sheath seal member 404 and the second sheath seal member 410 contact and form a seal with the outer sheath 104 of the umbilical cable 100.

It should be noted that the foregoing assembly is but one way to assemble the arrangement illustrated herewin. Components may be installed in a different order or different sequence than that described if desired.

The fiber termination arrangement 200 illustrated herein includes a primary or first sheath seal assembly 210 and a secondary or second sheath seal assembly 212 formed on the outer sheath 104 of the umbilical cable 100 and a primary or first tube seal assembly 214 and a secondary or second tube seal assembly 216 formed against the metal tube 110.

The fiber termination arrangement 200 is resin/epoxy free and does not require a potting operation. In addition, the outer sheath sealing design does not require a complex preparation process during termination. This speeds up the termination procedure and reduces the risk of failure due to non-conformance.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A fiber termination arrangement for terminating an optical line in a subsea environment, the optical line including an outer sheath and a tube disposed within the outer sheath, the fiber termination arrangement comprising:
an outer housing (202) having a first end, a second end, and an opening that extends in an axial direction between the first end and the second end;
a sheath seal (302) having a first groove (502) and a second groove (502), the sheath seal (302) positioned within the opening, the sheath seal (302) including:
a first sheath seal member (404) having a first contact surface arranged to sealingly engage the outer sheath (104), and a first head member (606) sealingly positioned within the first groove; and
a second sheath seal member (410) having a second contact surface arranged to sealingly engage the outer sheath (104), and a second head member (606) sealingly positioned within the second groove;
a tube seal (304) positioned within the opening, the tube seal (304) including:
a first tube seal member (1004) having a first tube seal surface (1206) arranged to sealingly engage the tube (110); and
a second tube seal member (1012) having a second tube seal surface (1206) arranged to sealingly engage the tube (110);
a sheath end cap (206) coupled to a first end of the outer housing (202) to inhibit movement of the sheath seal (302) in the axial direction, the sheath end cap (206) including a first aperture sized to allow passage of the outer sheath (104); and
a tube end cap (208) coupled to a second end of the outer housing (202) to inhibit movement of the tube seal (304) in the axial direction, the tube end cap (208) including a second aperture sized to inhibit passage of components larger than the tube (110).

2. The fiber termination arrangement according to claim 1, wherein the first groove includes a groove cylindrical surface and a groove conical surface that cooperate to define a tapered interior in the first groove.

3. The fiber termination arrangement of claim 2, wherein the first head member includes a first cylindrical surface engaged with the groove cylindrical surface and a second cylindrical surface engaged with the groove conical surface.

4. The fiber termination arrangement according to any of the preceding claims, wherein the first contact surface includes a plurality of pips, each pip having a smaller diameter than a remainder of the first contact surface.

5. The fiber termination arrangement according to any of the preceding claims, wherein the first sheath seal member is formed from a first material, the first sheath seal member further comprising an anti-extrusion member (612) formed from a second material different than the first material and embedded within the first material, wherein the anti-extrusion member in particular includes an axial canted coil spring.

6. The fiber termination arrangement according to any of the preceding claims, wherein the sheath seal further comprises a first inner housing and a second inner housing each disposed within the opening of the outer housing, the first groove formed as part of the first inner housing and the second groove formed as part of the second inner housing, in particular further comprising a shoulder formed as part of the outer housing, and wherein the second inner housing abuts the shoulder and the first inner housing biases the second inner housing and the second sheath seal member toward the shoulder, and wherein the sheath end cap biases the first inner housing and the first sheath seal member toward the shoulder.

7. The fiber termination arrangement according to any of the preceding claims, wherein the first tube seal surface includes a plurality of pips, each pip having a smaller diameter than a remainder of the first tube seal surface.

8. The fiber termination arrangement according to any of the preceding claims, wherein the tube seal further comprises a first base member, a first packing member, a second base member, and a second packing member, and wherein the first tube seal member is positioned between the first base member and the first packing member and the second tube seal member is positioned between the second base head member and the second packing member.

9. The fiber termination arrangement of claim 8, wherein the first outer seal includes a first planar surface that sealingly engages the first base member and a first conical surface that sealingly engages the first packing member, and wherein the second outer seal includes a second planar surface that sealingly engages the second base member and a second conical surface that sealingly engages the second packing member.

10. The fiber termination arrangement of claim 9, wherein the first packing member fixedly abuts the tube end cap, the first tube seal member abuts the first packing member, the first base member abuts the first tube seal member, the second packing member abuts the first base member, the second tube seal member abuts the second packing member, and the second base member abuts the second tube seal member, and wherein the second base member is biased axially toward the tube end cap to compress the second tube seal member between the second base member and the second packing member and to compress the first tube seal member between the first base member and the first packing member.

11. The fiber termination arrangement according to any of the preceding claims, further comprising a tube connecting member operable to electrically connect the tube and the tube end cap to extend cathodic protection therebetween.

12. The fiber termination arrangement of claim 11,
wherein the tube connecting member includes a plunger and a threaded adjustment mechanism, the threaded adjustment mechanism operable to move the plunger between an engaged position and a disengaged position; and or
further comprising a locking ring coupled to the first tube seal and the second tube seal to bias the first tube seal surface and the second tube seal surface into engagement with the tube.

13. A method of terminating an optical line in a subsea environment, the optical line (102) including an outer sheath (104) and a tube (110) disposed within the outer sheath (104), the method comprising:
positioning the optical line (102) within an opening of an outer housing (202), the entire cable entering the opening at a first end of the outer housing (202), and the tube (110) exiting the outer housing (202) through a tube end cap (208);
abutting a first tube seal assembly (214) against the tube end cap (208), the first tube seal assembly (214) disposed inside the outer housing (202);
placing a second tube seal assembly inside the outer housing, the second tube seal assembly abutting the first tube seal assembly;
abutting a second sheath seal assembly against a shoulder of the outer housing, the second sheath seal assembly disposed within the outer housing;
placing a first sheath seal assembly inside the outer housing, the first sheath seal member abutting the second sheath seal member; and
attaching a sheath end cap to the outer housing,
biasing the first sheath seal assembly into engagement with the second sheath seal assembly in response to attachment of the sheath end cap; and
installing a locking ring to bias the first tube seal assembly into engagement with the second tube seal assembly.

14. The method of claim 13, wherein the biasing the first sheath seal assembly into engagement with the second sheath seal assembly includes:
inserting a first head member of a first sheath seal member into a first groove to form a seal therebetween; and displacing a first contact surface of the first sheath seal member into sealing engagement with the outer sheath; and/or
compressing a first tube seal member between a first base member and a first packing member; and displacing a first tube seal surface of the first tube seal member into sealing engagement with the tube.

15. The method of claim 13 or 14, further comprising electrically connecting the tube and the tube end cap to extend cathodic protection therebetween.
